# FASCICULE DE BREVET EUROPEEN

(11) **EP 1 828 360 B1**
(45) Date de publication et mention de la délivrance du brevet: **13.02.2013**
(21) Numéro de dépôt: 05826583.6
(22) Date de dépôt: 16.12.2005
(51) Int. Cl.: C10M 167/00

(54) **COMPOSITION LUBRIFIANTE POUR MOTEUR MARIN A QUATRE TEMPS**
SCHMIERMITTELZUSAMMENSETZUNG FÜR EINEN VIERTAKTSCHIFFSMOTOR
LUBRICANT COMPOSITION FOR A FOUR-STROKE MARINE ENGINE

(30) Priorité: 16.12.2004 FR 0413410
(43) Date de publication de la demande: 05.09.2007
(73) Titulaire: TOTAL RAFFINAGE MARKETING, 92800 Puteaux (FR)
(72) Inventeur: LANÇON, Denis, F-69680 Chassieu (FR); HERAULT, Chantal, F-69440 Saint Sorlin (FR)
(74) Mandataire: Largeau, Béatrice
(86) Numéro de dépôt international: PCT/FR2005/003171
(87) Numéro de publication internationale: WO 2006/064138

(56) Documents cités:
- WO-A-99/64543
- US-A- 3 878 115
- US-B1- 6 339 051

## Description

La présente invention concerne une nouvelle huile de lubrification pour moteurs marins 4-temps, notamment pour moteurs marins 4-temps semi-rapides, contenant l'association d'au moins un polyisobutylène et d'au moins un agent anti-oxydant aminé thermorésistant.

On distingue généralement deux types de moteurs marins 4-temps, à savoir les moteurs marins 4-temps rapides et semi-rapides. Les moteurs du premier type sont des moteurs de gamme de puissance faible à modérée (15 à 200 kW par cylindre) dérivés des moteurs terrestres et utilisant des carburants de type distillats tels que le diesel marin à faible teneur en soufre. Leur vitesse de fonctionnement est en général de l'ordre de 1200 rpm. Ces moteurs sont utilisés pour la propulsion de navires de faible tonnage et comme unité de génération d'électricité à bord de navires plus importants.

Les moteurs marins 4-temps semi-rapides sont des moteurs de gamme de puissance moyenne à élevée (500 à 2000 kW par cylindre) de conception proche de celle des moteurs 4-temps rapides mais qui diffèrent de ces derniers par la plus grande taille de l'ensemble piston-cylindre. Ces moteurs se distinguent en outre par le fait que la tête du piston est refroidie par la circulation d'un fluide de refroidissement et par le fait qu'ils peuvent tourner aussi bien dans un sens que dans l'autre. Ces moteurs utilisent en général un carburant résiduel appelé fioul soute ou fioul lourd (*Heavy Fuel Oil*) qui, du fait de sa forte teneur en soufre, requiert un lubrifiant à indice total de base élevé, généralement compris entre 30 et 65 mg de KOH/g de lubrifiant. La vitesse de fonctionnement des moteurs marins 4-temps semi-rapides est comprise entre 300 et 600 rpm. Ces moteurs sont utilisés pour la propulsion de nombreux navires, tels que les cargos, les tankers, les ferries, voire même certains porte-containers. Ils peuvent en outre être utilisés comme unités de génération d'électricité à bord de navires de grande taille ou dans des centrales diesel-électriques.

Ces moteurs marins 4-temps ont un fonctionnement très différent de ceux des moteurs marins 2-temps, en particulier en ce qui concerne leur mode de lubrification. En effet, les moteurs marins 2-temps sont des moteurs très lents, de gamme de puissance élevée à très élevée (2000 à 6000 kW par cylindre). Ces moteurs sont toujours constitués de deux parties lubrifiées séparément, à savoir l'ensemble piston-cylindre lubrifié à graissage perdu par l'huile cylindre très visqueuse, généralement de grade SAE 50 ou 60, et l'arbre-manivelle lubrifié par l'huile système peu visqueuse (généralement de grade SAE 30). Le document US 6 339 051 B1 décrit une huile cylindre de grade SAE 50 ou 60 pour la lubrification à graissage perdu de cylindres de moteurs à faible vitesse.

Ces moteurs 2-temps utilisent en général un carburant résiduel appelé fioul soute qui, de part sa teneur très élevée en soufre, requiert généralement des huiles cylindres à nombre total de base (BN) pouvant aller jusqu'à 100 mg de KOH/g d'huile.

Deux paramètres déterminent l'intervalle de vidange totale ou partielle des huiles pour moteurs marins 4-temps, à savoir l'évolution en fonction du temps de la viscosité et du nombre de base de l'huile. On constate en effet :
- une diminution systématique du nombre de base (BN) en fonction du temps, diminution qui est liée au phénomène de neutralisation des acides formés lors de la combustion des espèces soufrées présentes dans le carburant. Cette diminution du BN nécessite un suivi des huiles. En effet, en deçà d'une certaine limite, la capacité de neutralisation de l'huile ne suffit plus à combattre les effets corrosifs des acides formés, ce qui peut se traduire par une usure corrosive excessive en particulier de l'ensemble piston-chemise.
- une augmentation systématique de la viscosité de l'huile en fonction du temps, augmentation qui est liée aux phénomènes d'oxydation des constituants de l'huile mais dont les mécanismes exacts sont encore mal connus. Cette augmentation de la viscosité nécessite un suivi viscosimétrique des huiles. En effet, au-delà d'une certaine viscosité l'huile ne peut plus assurer de façon satisfaisante son rôle de lubrification des parties en mouvement ou son rôle de fluide caloporteur pour contrôler la température de la tête de piston.

Une procédure d'alerte consistant à prélever régulièrement des échantillons d'huile moteur et à les soumettre à des analyses viscosimétriques et de mesure de BN, est ainsi prévue sur la plupart des navires utilisant des moteurs 4-temps. Pour cette procédure d'alerte, on estime généralement qu'un vidange partiel ou total est nécessaire lorsque la viscosité cinématique de l'huile mesurée à 40 °C excède une valeur de 200 mm²/s pour une huile de grade SAE 40 ou lorsque le BN de l'huile passe en dessous de la moitié de la valeur initiale.

De ces deux paramètres, l'augmentation de la viscosité est actuellement le paramètre critique gouvernant l'intervalle de vidange sur les moteurs marins 4-temps.

L'objectif de la présente invention est de ralentir le plus possible l'augmentation de la viscosité d'une huile de lubrification utilisée dans un moteur marin 4-temps, rapide ou semi-rapide, de manière à rallonger au maximum l'intervalle entre deux vidanges qui est actuellement de l'ordre de 10 000 heures pour les huiles connues.

Dans le cadre de ses recherches visant à ralentir l'augmentation de la viscosité des huiles pour moteurs marins 4-temps et de prolonger ainsi l'intervalle de vidange de ces huiles, la Demanderesse a découvert que l'association d'un épaississant polymère synthétique particulier et d'au moins un agent anti-oxydant aminé actif à haute température permettait de ralentir considérablement l'augmentation de la viscosité des huiles de lubrification pour moteurs 4 temps.

La présente invention a par conséquent pour objet une huile de lubrification de grade SAE 30 ou 40 pour moteurs marins 4-temps, tel que défini dans la revendication 1

L'invention a également pour objet l'utilisation d'une telle huile pour la lubrification d'un moteur marin 4 temps.

L'invention a enfin pour objet l'utilisation de l'association d'au moins un polyisobutylène soluble dans l'huile de base, ayant une masse moléculaire moyenne en nombre comprise entre 500 et 8000, de préférence entre 900 et 3000, et une viscosité cinématique (à 100 °C) comprise entre 50 et 50000 mm²/s, de préférence entre 200 et 6000 mm²/s et d'au moins un agent antioxydant aminé actif à une température supérieure ou égale à 180 °C, pour ralentir l'augmentation de la viscosité cinématique au cours du temps d'une huile de lubrification de moteur marin 4-temps, comprenant une huile de base d'origine synthétique ou minérale, et au moins un détergent surbasé nanoparticulaire, tel que défini dans les revendications.

Le système de classification des huiles moteur défini par la *Society of Automotive Engineers* (SAE) des Etats-Unis classe les huiles moteur à la fois selon leur comportement rhéologique à froid (préfix SAE) et leur viscosité à la température de fonctionnement d'un moteur (suffixe SAE). Le tableau ci-dessus indique les gammes de visosité cinématique et dynamique des huiles moteurs correspondant aux différents suffixes SAE.

| Suffixe SAE | Viscosité cinématique (mm²/s) mesurée à 100 °C dans des conditions de faible cisaillement | Viscosité dynamique (mPa.s) mesurée à 150 °C dans des conditions de cisaillement important |
|---|---|---|
| 20 | 5,6 - 9,3 | >2,6 |
| 30 | 9,3 - 12,5 | >2,9 |
| 40 | 12,5 - 16,9 | >2,9* |
| 40 | 12,5 - 16,9 | >3,7** |
| 50 | 16,9 - 21,9 | >3,7 |
| 60 | 21,9 - 26,1 | >3,7 |

| | | |
|---|---|---|
| *pour les huiles OW40, 5W40 et 10W40, ** pour les huiles 15W40, 20W40 et 25W40. | | |

Ce tableau montre que chaque suffixe SAE correspond à une gamme de viscosité cinématique bien déterminée qui ne chevauche pas la gamme de viscosité cinématique du suffixe SAE supérieur ou inférieur.

Les huiles lubrifiantes pour moteurs marins 4-temps de la présente invention sont des huiles de grade SAE 30 ou 40, c'est-à-dire qu'elles ont une viscosité cinématique, mesurée à 100 °C, comprise entre 9,3 et 16,9 mm²/s, et une viscosité dynamique mesurée à 150 °C supérieure à 2,9 mPa.s.

Dans un mode de réalisation préféré, les huiles moteur selon l'invention ont une viscosité cinématique (100°C) comprise entre 10 et 15 mm²/s, et plus particulièrement entre 13,5 et 14,5 mm²/s.

L'huile de base servant à la préparation des huiles de lubrification de la présente invention peut en principe être n'importe quelle huile de base, d'origine minérale ou synthétique, entrant couramment dans la composition des huiles lubrifiantes.

Ces huiles de base sont classées actuellement en cinq groupes, numérotés de I à V, définis par l'API *(American Petroleum Institute)* en fonction des caractéristiques indiquées dans le tableau suivant :

| | Teneur en composés saturés | Teneur en soufre | Indice de viscosité (VI) |
|---|---|---|---|
| Groupe I | < 90 % | > 0,03 % | 80 ≤ VI ≤ 120 |
| Groupe II | ≥ 90 % | ≤ 0,03 % | 80 ≤ VI ≤ 120 |
| Groupe III | ≥ 90 % | ≤ 0,03 % | ≥ 120 |
| Groupe IV | Poly(α-oléfines) | | |
| Groupe V | Autres bases (par exemple esters et alkylbenzènes) | | |

L'indice de viscosité (VI) est déterminé conformément à la norme ASTM D 2270 à partir des viscosités cinématiques mesurées à 40 °C et à 100 °C.

Pour des raisons de rentabilité économique, l'huile de base est de préférence une huile d'origine minérale, c'est-à-dire une huile obtenue par raffinage du pétrole brut, appartenant à l'un des groupes I à III ci-dessus.

Les huiles de base des groupes II et III ont, du fait de leur teneur élevée en composés saturés, une polarité relativement plus faible que les huiles de base du groupe I ce qui se traduit par un pouvoir détergent moindre. Par ailleurs, les taux d'additifs dans les huiles pour moteurs marins sont généralement assez élevés et pourraient ne pas être suffisamment solubles dans des bases peu polaires des groupes II et III. Pour les raisons précitées, les huiles de base d'origine minérale du groupe I sont particulièrement préférées pour la préparation des huiles de lubrification de la présente invention.

Parmi les huiles de base du groupe I, on peut différencier les bases distillées, obtenues par raffinage spécifique des coupes distillats issues de l'unité de distillation sous vide, et l'huile de base *brightstock,* grade résiduel d'huile de base obtenu par raffinage spécifique du résidu court de l'unité de distillation sous vide. L'huile de base *brightstock* a une viscosité cinématique à 100°C supérieure à 25 mm²/s, habituellement supérieure à 30 mm²/s, alors que les huiles de base distillées, appelées *Neutral Solvent,* sont classifiées par leur viscosité SUS à 100F qui varie de 100 à 800 unités.

Le mélange d'huiles de base utilisé dans l'invention contient de préférence peu ou pas de *brightstock.* En effet, l'utilisation de polyisobutylène en tant qu'agent épaississant permet de remplacer partiellement voire totalement cet ingrédient utilisé classiquement pour augmenter la viscosité des huiles de lubrification d'origine minérale. Le remplacement total ou partiel du *brightstock* par le polyisobutylène se traduit avantageusement par un moindre encrassement du moteur. En effet, la dégradation du polyisobutylène aboutit à la formation de produits volatiles qui s'échappent du moteur, et non pas, comme pour le *brightstock,* à la formation de résidus de carbonisation de couleur foncée susceptibles de former des dépôts ou des vernis sur les différentes pièces du moteur.

Le mélange d'huiles de base représente de 50 à 95 % en poids, de préférence 70 à 90 % en poids de l'huile moteur selon l'invention.

L'indice de viscosité de l'huile de base, déterminé selon la norme ASTM D2270, est de préférence supérieur à 80, en particulier compris entre 95 et 110.

Les huiles moteurs selon l'invention contiennent en outre au moins un détergent surbasé nanoparticulaire. Les détergents surbasés sont des nanoparticules organominérales constituées d'un noyau minéral en carbonate de calcium, de magnésium, de baryum ou de sodium, à la surface duquel est adsorbée une couche d'agents tensioactifs associés selon une structure de type micelle inverse (queues hydrophobes dirigées vers l'extérieur, têtes hydrophiles dirigées vers l'intérieur de la micelle). Les détergents surbasés sont de préférence des phénates, salicylates et/ou sulfonates de carbonate de calcium. Ils sont connus et utilisés classiquement en tant qu'agent de neutralisation et/ou de détergent dans les huiles moteurs. Les détergents surbasés assurent la propreté haute température du moteur et limitent l'usure corrosive du moteur par les acides formés par oxydation des composés soufrés du carburant.

La quantité de détergent surbasé des huiles de la présente invention est exprimée sous forme de nombre de base (*base number* (BN) ou *total base number* (TBN), déterminé selon la norme ASTM D-2896). Celui-ci est généralement compris entre 3 et 100 mg de KOH/g.

La quantité de détergent surbasé utilisée dans les huiles de la présente invention dépend bien entendu de la teneur en soufre du carburant utilisé. Plus celle-ci est élevée, plus la quantité de détergent surbasé doit être importante.

Ainsi, pour des carburants tels que le fioul soute (*heavy fuel oil*) ayant une teneur en soufre importante, comprise généralement entre 0,2 et 4,5% en poids, il est nécessaire d'ajouter à l'huile moteur selon l'invention une quantité de détergent surbasé suffisante pour obtenir un nombre de base compris entre 20 et 65 mg de KOH/g.

Par contre pour des moteurs alimentés par des carburants à faible teneur en soufre (0,05 à 0,2 % en poids), tels que les moteurs marins 4-temps rapides, un nombre de base compris entre 3 et 20 mg de KOH/g est généralement suffisant.

Ces fourchettes ne sont toutefois données qu'à titre indicatif et peuvent être modifiées facilement par le formulateur d'huile en fonction de la teneur en soufre du carburant utilisé dans le moteur en question.

Le polyisobutylène (PIB) utilisé dans les huiles de lubrification de la présente demande est un liquide visqueux miscible avec l'huile de base. Comme indiqué ci-dessus, il a une masse moléculaire moyenne en nombre comprise entre 500 et 8000, de préférence entre 900 et 3000, et une viscosité cinématique (à 100 °C) comprise entre 50 et 50000 mm²/s, de préférence entre 200 et 6000 mm²/s.

Le polyisobutylène est le principal agent d'épaississement des huiles de la présente invention et servira par conséquent à ajuster la viscosité de celles-ci. L'homme du métier n'aura pas de mal à choisir, à l'intérieur des gammes indiquées ci-dessus, la quantité de polyisobutylène en fonction de la masse moléculaire de celui-ci ou, inversement, la masse moléculaire du polyisobutylène en fonction de la quantité de PIB qu'il souhaite incorporer dans l'huile : pour une viscosité finale donnée, la quantité de polyisobutylène utilisée doit être d'autant plus grande que la masse moléculaire du polymère est faible, et inversement.

Le polyisobutylène est un produit commercial disponible chez de nombreux fabricants.

Le terme « polyisobutylène » tel qu'il est utilisé dans la présente invention englobe également des mélanges de plusieurs polyisobutylènes, synthétisés séparément et pouvant éventuellement avoir des masses moléculaires en dehors des fourchettes de valeurs indiquées ci-dessus, à condition que le mélange des différents PIB ait une masse moléculaire comprise dans lesdites fourchettes.

Les agents anti-oxydants utilisés dans la présente invention en association avec le polyisobutylène pour ralentir l'augmentation de la viscosité en cours d'utilisation des huiles de lubrification, doivent résister aux températures élevées rencontrées couramment dans les moteurs marins 4-temps, c'est-à-dire ils doivent toujours être actifs à des températures supérieures à 180 °C. Les agents anti-oxydants doivent en outre être solubles dans l'huile lubrifiante de l'invention.

La Demanderesse a constaté en outre que les agents antioxydants aminés, de préférence les amines aromatiques, sont les seules familles d'agents anti-oxydants à donner, en combinaison avec un agent épaississant de type polyisobutylène, des résultats intéressants en termes de ralentissement de l'augmentation de la viscosité des huiles de lubrification. On peut citer à titre d'exemples d'amines aromatiques, les monoamines aromatiques de formule

R¹R²R³N

où R¹ et R² représentent chacun, indépendamment l'un de l'autre, un atome d'hydrogène, un groupe aliphatique en C₁₋₂₀, de préférence en C₄₋₁₆, ou un groupe aromatique ou hétéroaromatique, monocyclique ou polycyclique condensé, substitué ou non substitué, R³ est un groupe aromatique ou hétéroaromatique, monocyclique ou polycyclique condensé, non substitué ou portant un substituant alkyle en C₁₋₂₀, ou R¹ et R³ forment conjointement un groupe aromatique ou hétéroaromatique, monocyclique ou polycyclique condensé.

Les agents antioxydants aminés selon l'invention englobent par exemple les familles des diphénylamines, phénylnaphtylamines, phénothiazines, imidodibenzyles et N,N'-diphényl(phénylènediamines).

On peut citer à titre d'exemples d'amines aromatiques préférées celles correspondant aux formules suivantes :

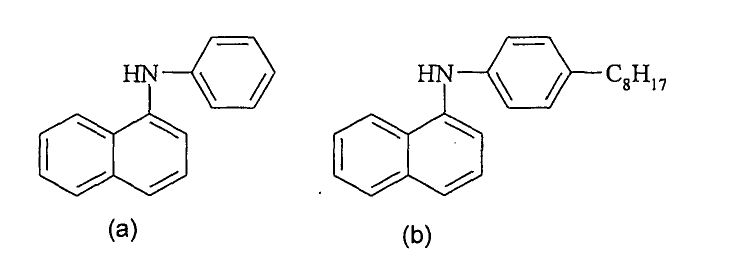

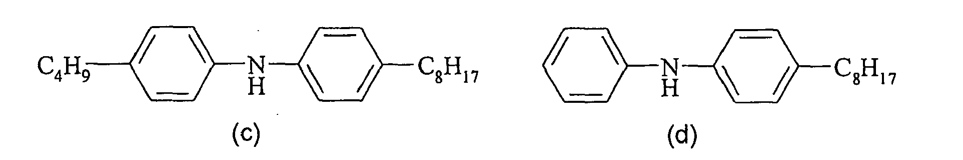

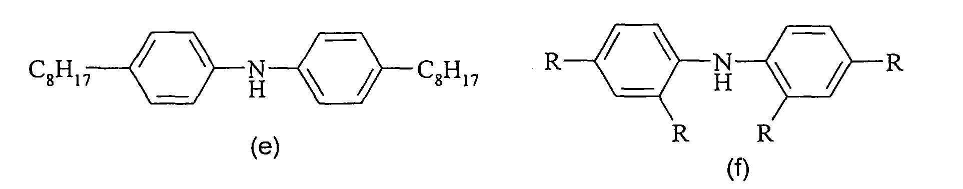

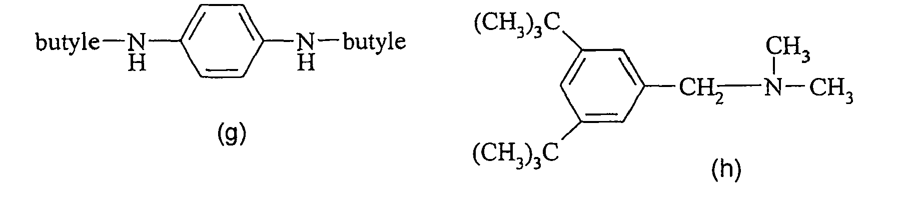

Parmi ces amines aromatiques on préfère les alkylarylamines.

La quantité d'agent anti-oxydant aminé est comprise entre 0,05 et 5,0 % en poids, de préférence entre 0,1 et 1,0 % en poids.

L'huile de lubrification selon l'invention contient en outre généralement un concentré d'additifs comprenant, entre autres, par exemple des agents dispersants, des additifs anti-usure, des agents anti-corrosion, des agents anti-rouille, des agents anti-mousse, des agents anti-oxydants autres que les amines décrites ci-dessus, des agents permettant d'abaisser le point d'écoulement de l'huile. Tous ces additifs sont connus et utilisés couramment pour améliorer les caractéristiques des huiles lubrifiantes.

La présente invention est illustrée à l'aide de l'exemple suivant qui montre l'effet synergique de l'utilisation conjointe d'un polyisobutylène et d'un agent oxydant stable à une température supérieure à 180 °C sur l'augmentation la viscosité par oxydation d'une huile de lubrification dans un moteur marin 4-temps.

### Exemple

### Essai de vieillissement longue durée d'une huile de lubrification par oxydation en couche mince (voir schéma en annexe)

Le mode opératoire simule le vieillissement oxydatif des lubrifiants pour moteurs 4-temps. Un volume d'environ 400 ml d'huile lubrifiante est versé dans une cuve en verre ayant un diamètre intérieur de 115 mm. Cette cuve est en outre pourvue d'une double enveloppe permettant la circulation d'eau en tant que liquide réfrigérant. Tout au long de l'essai, la température et le débit de l'eau de réfrigération sont réglés de manière à ce que la température du lubrifiant à l'intérieur de la cuve ne dépasse pas 60 °C environ. L'ensemble du dispositif est incliné de 3° par rapport à l'horizontale.

Une éprouvette d'aluminium est disposée dans cette cuve de façon à ce que le fond circulaire de l'éprouvette (diamètre 105 mm) soit distant de 80 mm du fond intérieur de la cuve et d'environ 40 mm du niveau de l'huile du test. Cette éprouvette est maintenue à la température de l'essai, c'est-à-dire à une température comprise entre 270 et 320 °C, au moyen d'une résistance électrique d'une puissance de 200 W, insérée à l'intérieur de l'éprouvette.

La double enveloppe de réfrigération est percée au niveau de la paroi latérale de la cuve d'une ouverture permettant le passage d'un bras rotatif motorisé, incliné à 14 °C par rapport à l'horizontale. Le bras s'étend dans l'espace (d'une hauteur de 40 mm environ) entre la surface de l'huile et la surface inférieure du fond de l'éprouvette. Ce bras, animé d'un mouvement de rotation de 1000 tours par minute, est équipé d'un balai en contact avec la surface de l'huile et permettant de projeter l'huile à tester sur la surface inférieure de l'éprouvette chauffée où l'huile s'écoule avant de retomber dans le volume d'huile au fond de la cuve.

Dans les conditions décrites ci-dessus, l'éprouvette en aluminium est maintenue à la température de 310 °C. A des intervalles réguliers (toutes les 20, 40 ou 60 heures par exemple), on prélève un échantillon de 10 ml d'huile et on mesure sa viscosité cinématique à 100°C puis à 40°C conformément à la norme ASTM D445. On détermine également le nombre de base de l'échantillon conformément à la norme ASTM D2986. Un volume de 10 ml d'huile neuve est ajouté dans la cuve en remplacement de l'échantillon d'huile prélevé.

L'essai de vieillissement oxydatif décrit ci-dessus a été utilisé pour comparer la résistance à l'oxydation d'une série de cinq huiles de lubrification préparées à partir de deux huiles de base de grades viscosimétriques différents.

Le tableau 1 ci-dessous présente les résultats de ces essais. La résistance à l'oxydation des huiles comparatives (essais comparatifs 1 à 3) et des huiles selon l'invention (essais 4 à 7) y est exprimée comme la durée d'essai qui s'écoule avant que la viscosité cinématique à 40 °C de l'échantillon n'atteigne une valeur de 200 mm²/s.

Les huiles comparatives contiennent soit uniquement de l'huile de base additivée (essai 1), soit de l'huile de base additivée contenant en outre un agent anti-oxydant aminé (essai 2) ou du poly(isobutylène) (essai 3). Les huiles selon l'invention (essais 4, 5, 6 et 7) contiennent à la fois un agent antioxydant aminé et un polyisobutylène.

**Tableau 1**

| | Essai comp. 1 | Essai comp. 2 | Essai comp. 3 | Essai 4 selon l'invention | Essai 5 selon l'invention | Essai 6 selon l'invention | Essai 7 selon l'invention |
|---|---|---|---|---|---|---|---|
| Huile minérale de base (600 NS) | 84,9 % | 84,6% | - | - | - | - | - |
| Huile minérale de base (330NS) | - | - | 79,4 % | 79,1 % | 71,6 % | 79,1 % | 79,1 % |
| Additifs* | 15,1 % | 15,1 % | 15,1 % | 15,1 % | 15,1 % | 15,1 % | 15,1 % |
| PIB A ^{(a)} | - | - | - | - | **13,0** | - | - |
| PIB B ^{(b)} | - | - | 5,5 % | **5,5 %** | **-** | **5,5 %** | **5,5 %** |
| Agent anti-oxydant aminé | | | | | | | |
| (alkylarylamine) | - | | - | | | | |
| OLOA 4860 | | 0,3 % | | **0,3 %** | **0,3 %** | | |
| IRGANOX L57 | | | | | | **0,3 %** | |
| LUBRIZOL 5150C | | | | | | | **0,3 %** |
| Durée pour l'obtention d'une viscosité cinématique à 40 °C de 200 mm²/s | 110 h | 110 h | 100 h | **170 h** | **200 h** | **150 h** | **180 h** |

| | | | | | | | |
|---|---|---|---|---|---|---|---|
| ^{(a)} polyisobutylène de masse moléculaire moyenne en nombre égal à 910 ^{(b)} polyisobutylène de masse moléculaire moyenne en nombre égale à 2500 | | | | | | | |

La comparaison des essais comparatifs 1 et 2 montre clairement que l'addition de 0,3 % d'agent anti-oxydant aminé à l'huile de lubrification n'a aucune incidence sur la vitesse d'augmentation de la viscosité cinématique de celle-ci. De manière analogue, le seul remplacement d'une partie de l'huile de base par du polyisobutylène ne permet pas non plus de ralentir l'augmentation de la viscosité cinématique de celle-ci (comparaison des essais comparatifs 1 et 3). Seule la combinaison d'un polyisobutylène et d'un agent anti-oxydant aminé permet de rallonger considérablement le temps qui s'écoule avant que la viscosité cinématique n'atteigne la valeur critique de 200 mm²/s (comparaison des essais 4 et 5 selon l'invention avec l'essai comparatif 3).

Les essais 4, 5, 6 et 7 selon l'invention démontrent que plusieurs additifs anti-oxydant commerciaux de structure alkylarylamine permettent de rallonger considérablement et d'une manière équivalente le temps qui s'écoule avant que la viscosité cinématique n'atteigne la valeur critique de 220 mm²/s.

## Revendications

1. Huile de lubrification de grade SAE 30 ou 40 pour moteurs marins 4-temps, comprenant :
(a) de 50 à 95 % en poids d'une huile de base d'origine minérale ou synthétique,
(b) au moins un détergent surbasé nanoparticulaire en une quantité suffisante pour obtenir un nombre de base (BN) compris entre 3 et 100 mg de KOH/g pour neutraliser les composés acides formés par oxydation des composés soufrés du carburant alimentant le moteur,
(c) de 1 à 20 % en poids d'au moins un polyisobutylène soluble dans l'huile de base, ayant une masse moléculaire moyenne en nombre comprise entre 500 et 8000, et une viscosité cinématique (à 100 °C) comprise entre 50 et 50000 mm²/s, de préférence entre 200 et 6000 mm²/s,
(d) de 0,05 à 5,0 % d'au moins un agent anti-oxydant aminé actif à une température supérieure ou égale à 180 °C,
ladite huile de lubrification présentant une viscosité cinématique à 100°C, comprise entre 9,3 et 14,5 mm²/s.

2. Huile de lubrification selon la revendication 1, **caractérisée par le fait que** l'agent anti-oxydant aminé actif à une température supérieure ou égale à 180 °C est une amine aromatique.

3. Huile de lubrification selon la revendication 1 ou 2, **caractérisée par le fait qu'**elle présente une viscosité cinématique à 100°C comprise entre 10 et 14,5 mm²/s, de préférence entre 13,5 et 14,5 mm²/s

4. Huile de lubrification selon l'une quelconque des revendications précédentes, **caractérisée par le fait que** le ou les détergents surbasés sont choisis parmi les phénates, les salicylates et les sulfonates.

5. Huile de lubrification selon la revendication 2, **caractérisée par le fait que** l'agent oxydant aminé est une monoamine aromatique de formule
R¹R²R³N
où R¹ et R² représentent chacun, indépendamment l'un de l'autre, un atome d'hydrogène, un groupe aliphatique en C₁₋₂₀, de préférence en C₄₋₁₆, ou un groupe aromatique ou hétéroaromatique, monocyclique ou polycyclique condensé, substitué ou non substitué, R³ est un groupe aromatique ou hétéroaromatique, monocyclique ou polycyclique condensé, non substitué ou portant un substituant alkyle en C₁₋₂₀, ou R¹ et R³ forment conjointement un groupe aromatique ou hétéroaromatique, monocyclique ou polycyclique condensé.

6. Huile de lubrification selon la revendication 5, **caractérisée par le fait que** l'agent anti-oxydant aminé est une alkylarylamine.

7. Utilisation d'une huile selon l'une quelconque des revendications précédentes en tant qu'huile de lubrification pour moteurs marins 4-temps.

8. Utilisation de l'association
(a) d'au moins un polyisobutylène soluble dans l'huile de base, ayant une masse moléculaire moyenne en nombre comprise entre 500 et 8000, et une viscosité cinématique (à 100 °C) comprise entre 50 et 50000 mm²/s,
(b) et d'au moins un agent antioxydant aminé actif à une température supérieure ou égale à 180 °C,
pour ralentir l'augmentation, au cours du temps, de la viscosité cinématique d'une huile de lubrification de moteur marin 4-temps, cette huile de lubrification, de grade SAE 30 ou 40, et de viscosité cinématique à 100°C, comprise entre 9,3 et 14,5 mm²/s, comprenant une huile de base d'origine synthétique ou minérale et au moins un détergent surbasé nanoparticulaire.

## Claims

1. An SAE 30 or 40 grade lubricating oil for 4-stroke marine engines, comprising:
(a) 50 to 95% by weight of a base oil of mineral or synthetic origin;
(b) at least one nanoparticulate overbased detergent in an amount sufficient to obtain a base number (BN) of between 3 and 100 mg of KOH/g to neutralize the acid compounds formed by oxidation of the sulfur compounds in the fuel supplied to the engine;
(c) 1 to 20% by weight of at least one polyisobutylene soluble in the base oil, having a number-average molecular weight between 500 and 8000 and a kinematic viscosity (at 100°C) between 50 and 50 000 mm²/s, preferably between 200 and 6000 mm²/s; and
(d) 0.05 to 5.0% of at least one amine antioxidant active at a temperature of 180°C or above, said lubricating oil having a kinematic viscosity at 100°C of between 9,3 and 14,5 mm²/s.

2. The lubricating oil as claimed in claim 1, **characterized in that** the amine antioxidant active at a temperature of 180°C or above is an aromatic amine.

3. The lubricating oil as claimed in claim 1 or 2, **characterized in that** it has a kinematic viscosity at 100°C of between 10 and 14,5 mm²/s, preferably between 13.5 and 14.5 mm²/s.

4. The lubricating oil as claimed in any one of the preceding claims, **characterized in that** the overbased detergent or detergents are chosen from phenates, salicylates and sulfonates.

5. The lubricating oil as claimed in claim 2, **characterized in that** the amine oxidizing agent is an aromatic monoamine of formula:
R¹R²R³N
where R¹ and R² each represent, independently of each other, a hydrogen atom, a C₁₋₂₀, preferably C₄₋₁₆, aliphatic group, or an aromatic or heteroaromatic, monocyclic or condensed polycyclic, substituted or unsubstituted group, R³ is an aromatic or heteroaromatic, monocyclic or condensed polycyclic, unsubstituted group or a group carrying a C₁₋₂₀ alkyl substituent, or R¹ and R³ together form an aromatic or heteroaromatic, monocyclic or condensed polycyclic group.

6. The lubricating oil as claimed in claim 5, **characterized in that** the amine antioxidant is an alkylarylamine.

7. The use of an oil as claimed in any one of the preceding claims as a lubricating oil for 4-stroke marine engines.

8. The use of the combination of:
(a) at least one polyisobutylene soluble in the base oil, having a number-average molecular weight between 500 and 8000 and a kinematic viscosity (at 100°C) between 50 and 50 000 mm²/s; and
(b) at least one amine antioxidant active at a temperature of 180°C or above,
in order to slow down the increase, over the course of time, of the kinematic viscosity of a 4-stroke marine engine lubricating oil, this lubricating oil, of SAE 30 or 40 grade and having a kinematic viscosity at 100°C of between 9,3 and 14,5 mm²/s, comprising a base oil of synthetic or mineral origin and at least one nanoparticulate overbased detergent.

## Patentansprüche

1. Schmieröl der Klasse SAE 30 oder 40 für Viertakt-Schiffsmotoren, mit:
(a) von 50 bis 95 Gew.-% eines Basisöls mineralischer oder synthetischer Herkunft,
(b) zumindest einem überbasischen nanopartikulären Detergens in einer hinreichenden Menge, um eine Basenzahl (BN) zu erzielen, die zwischen 3 und 100 mg KOH/g liegt, um die sauren Komponenten zu neutralisieren, die durch Oxidation schwefliger Verbindungen des Brennstoffs gebildet werden, der den Motor nährt,
(c) von 1 bis 20 Gew.-% zumindest eines Polyisobutylens, das in dem Basisöl löslich ist, mit einer zahlengemittelten molekularen Masse, die zwischen 500 und 8000 liegt, und einer kinematischen Viskosität bei 100 °C, die zwischen 50 und 50000 mm²/s liegt, vorzugsweise zwischen 200 und 6000 mm²/s,
(d) von 0,05 bis 5,0 % zumindest eines aminischen Antioxidationsmittels, das bei einer Temperatur von größer gleich 180 °C aktiv ist,
wobei das Schmieröl bei 100°C eine kinematische Viskosität aufweist, die zwischen 9,3 und 14,5 mm²/s liegt.

2. Schmieröl gemäß Anspruch 1, **dadurch gekennzeichnet, dass** das aminische Antioxidationsmittel, das bei einer Temperatur von größer gleich 180 °C aktiv ist, ein aromatisches Amin ist.

3. Schmieröl gemäß Anspruch 1 oder 2, **dadurch gekennzeichnet, dass** es bei 100°C eine kinematische Viskosität aufweist, die zwischen 10 und 14,5 mm²/s liegt, vorzugsweise zwischen 13,5 und 14,5 mm²/s.

4. Schmieröl gemäß einem der vorigen Ansprüche, **dadurch gekennzeichnet, dass** das oder die überbasischen Detergentien gewählt sind aus den Phenolaten, den Salicylaten und den Sulfonaten.

5. Schmieröl gemäß Anspruch 2, **dadurch gekennzeichnet, dass** das aminische Antioxidationsmittel ein aromatisches Monoamin der Formel R¹R²R³N ist, wobei
R¹ und R² jedes unabhängig von dem anderen ein Wasserstoffatom, eine aliphatische Gruppe von C1-20, vorzugsweise C4-16, oder eine aromatische oder heteroaromatische Gruppe ist, monozyklisch oder polyzyklisch kondensiert, substituiert oder nicht substituiert, und
R³ eine aromatische oder heteroaromatische Gruppe ist, monozyklisch oder polyzyklisch kondensiert, nicht substituiert oder mit einem alkylischen Substituenten von C1-20,
oder R¹ et R³ zusammen aromatische oder heteroaromatische Gruppe bilden, monozyklisch oder polyzyklisch kondensiert.

6. Schmieröl gemäß Anspruch 5, **dadurch gekennzeichnet, dass** das das aminische Antioxidationsmittel ein Alkylarylamin ist.

7. Verwendung eines Öls gemäß einem der vorigen Ansprüche als Schmieröl für Viertakt-Schiffsmotoren.

8. Verwendung einer Vereinigung aus
(a) zumindest einem Polyisobutylen, das in dem Basisöl löslich ist, mit einer zahlengemittelten molekularen Masse, die zwischen 500 und 8000 liegt, und einer kinematischen Viskosität bei 100 °C, die zwischen 50 und 50000 mm²/s liegt,
(b) und zumindest einem aminischen Antioxidationsmittel, das bei einer Temperatur von größer gleich 180 °C aktiv ist,
zum Verlangsamen der Erhöhung der kinematischen Viskosität eines Schmieröls für Viertakt-Schiffsmotoren über die Zeit,
wobei das Schmieröl von der Klasse SAE 30 oder 40 ist,
bei 100°C eine kinematische Viskosität aufweist, die zwischen 9,3 und 14,5 mm²/s liegt,
und ein Basisöl mineralischer oder synthetischer Herkunft und zumindest ein überbasisches nanopartikuläres Detergens enthält.
